# EUROPEAN PATENT APPLICATION

(11) **EP 3 107 137 A1**
(43) Date of publication of application: **21.12.2016**
(21) Application number: 15749110.1
(22) Date of filing: 03.02.2015
(51) Int. Cl.: H01M 2/34, H01G 2/04, H01G 11/10, H01M 2/10, H01M 10/42, H01G 2/10, H01G 11/82, H01G 11/76, H01M 2/20

(54) **WIRING MODULE AND ELECTRICAL STORAGE MODULE**

(30) Priority: 14.02.2014 JP 2014026691
(71) Applicant: AutoNetworks Technologies, Ltd., Yokkaichi-shi, Mie 510-8503 (JP); Sumitomo Wiring Systems, Ltd., Yokkaichi-shi, Mie-ken 510-8503 (JP); Sumitomo Electric Industries, Ltd., Osaka-shi, Osaka 541-0041 (JP)
(72) Inventor: FUKUSHIMA Naoki, Yokkaichi-shi Mie 510-8503 (JP); MORITA Mitsutoshi, Yokkaichi-shi Mie 510-8503 (JP); FUJITA Tetsuya, Yokkaichi-shi Mie 510-8503 (JP); NAKAYAMA Osamu, Yokkaichi-shi Mie 510-8503 (JP)
(74) Representative: Müller-Boré & Partner Patentanwälte PartG mbB
(86) International application number: PCT/JP2015/052907
(87) International publication number: WO 2015/122314

(57) **Abstract**

An insulating cover 47 of a wiring module 20 includes a first cover portion 48 displaceable between a first closing position for covering an inter-electrode connecting member 21 and a first opening position for exposing the inter-electrode connecting member 21 and a second cover portion 57 connected to the first cover portion 48 and rotatable between a second closing position for covering an end connecting member 23 and a second opening position for exposing the end connecting member 23 with the first cover portion 48 set at the first closing position. The first cover portion 48 includes an engaging portion 55 and the second cover portion 57 includes an engaged portion 61 for holding the second cover portion 57 in position with respect to the first cover portion 48 by being engaged with the engaging portion 55.

## Description

### Technical Field

The present invention relates to a wiring module and an electrical storage module.

### Background Art

An electrical storage module mounted in a vehicle such as an electric vehicle or a hybrid vehicle is generally configured such that electrodes of a multitude of electrical storage elements having positive and negative electrodes are connected in series via connecting members. Further, a battery cover is mounted to insulate the electrodes and the connecting members from outside.

A battery cover of patent literature 1 is mounted on a case embedded with a busbar and configured to cover end parts of batteries, and a cover main body and an opening/closing cover are coupled via a hinge. The opening/closing cover is coupled to both ends of the cover main body in a longitudinal direction. When the cover main body is mounted on the case, the opening/closing cover is displaceable between a closing position located at an end for covering electrodes of two small-size batteries and an opening position for exposing the electrodes. Further, the case is provided with a projection and a claw portion of the opening/closing cover is locked to the projection of the case at the closing position.

### Citation List

### Patent Literature

Patent Literature 1:
Japanese Unexamined Patent Publication No. 2001-332235

### Summary of the Invention

### Technical Problem

In the configuration of patent literature 1, the opening/closing cover can be held at the closing position by locking the claw portion of the opening/closing cover to the projection of the case, but the opening/closing cover cannot be held at the opening position. Thus, there is concern that operability is reduced in performing an operation of opening the opening/closing cover and connecting the electrodes located on the end.

The present invention was completed based on the above situation and aims to facilitate a connecting operation of electrode terminals on an end part of series connection.

### Solution to Problem

The present invention disclosed by this specification is directed to a wiring module to be mounted on an electrical storage element group formed by arranging a plurality of electrical storage elements including positive and negative electrode terminals, the wiring module including an inter-electrode connecting member for electrically connecting between the electrode terminals of adjacent ones of the electrical storage elements, an end connecting member to be connected to the electrode terminal located on an end part of series connection, an insulating protector for accommodating the inter-electrode connecting member and the end connecting member, and an insulating cover for covering the insulating protector, wherein the insulating cover includes a first cover portion displaceable between a first closing position for covering the inter-electrode connecting member and a first opening position for exposing the inter-electrode connecting member, and a second cover portion connected to the first cover portion and rotatable between a second closing position for covering the end connecting member and a second opening position for exposing the end connecting member with the first cover portion set at the first closing position, and the first cover portion includes an engaging portion and the second cover portion includes an engaged portion for holding the second cover portion in position with respect to the first cover portion by being engaged with the engaging portion.

According to this configuration, the second cover portion can be held in position with respect to the first cover portion by engaging the engaged portion of the second cover portion with the engaging portion of the first cover portion when a connecting operation is performed for the electrode terminal on the end part of series connection. Thus, the connecting operation for the electrode terminal on the end part of series connection can be easily performed.

It is preferable to provide the following configurations in addition to the above configuration.

A deflectable and deformable deflecting portion is provided which connects the insulating protector and the first cover portion.

In this way, since it is not necessary to perform a mounting operation of the insulating cover as compared to the case where the insulating protector and the insulating cover are separate bodies, the operability of the connecting operation of the electrode terminals can be improved.

The end connecting member includes an electrode connecting portion to be connected to the electrode terminal and an external connecting portion to be connected to outside, the insulating cover includes an insulating wall for insulating the external connecting portion from outside, the insulating wall is formed with the locking portion, the locked portion includes a resilient portion to be resiliently deformed by coming into contact with the locking portion, and the second cover portion includes a pressing portion for pressing the insulating wall from a side opposite to the locked portion when the locked portion comes into contact with the locking portion.

In this way, the deformation of the insulating wall when the locked portion comes into contact with the locking portion can be suppressed by the pressing portion pressing the insulating wall.

The second cover portion is connected to a tip side of the first cover portion.

In this way, since the second cover portion can be locally opened and closed, the entrance of dust and the like from outside can be suppressed and the second cover portion can be easily and safely opened and closed.

The electrical storage element group and the wiring module to be mounted on the electrical storage element group are configured into an electrical storage module.

### Effects of the Invention

According to a technique disclosed by this specification, it is possible to facilitate a connecting operation of electrode terminals and a connecting operation of the electrode terminal on an end part of series connection.

### Brief Description of the Drawings

FIG. 1 is a plan view showing an electrical storage module of one embodiment,
FIG. 2 is a plan view showing a wiring module in which a first cover portion is at a first closing position and a second cover portion is at a second closing position,
FIG. 3 is a side view showing the wiring module in which the first cover portion is at the first closing position and the second cover portion is at the second closing position,
FIG. 4 is a section along A-A of FIG. 2,
FIG. 5 is a section along B-B of FIG. 3,
FIG. 6 is a plan view showing the wiring module in which the first cover portion is at the first closing position and the second cover portion is at a second opening position,
FIG. 7 is a side view showing the wiring module in which the first cover portion is at the first closing position and the second cover portion is at the second opening position,
FIG. 8 is a rear view showing the wiring module in which the first cover portion is at the first closing position and the second cover portion is at the second opening position,
FIG. 9 is a plan view showing the wiring module in which the first cover portion is at a first opening position and the second cover portion is at the second closing position,
FIG. 10 is a side view showing the wiring module in which the first cover portion is at the first opening position and the second cover portion is at the second closing position,
FIG. 11 is a plan view showing the wiring module in which the first cover portion is at the first opening position and the second cover portion is at a second opening position,
FIG. 12 is a side view showing the wiring module in which the first cover portion is at the first opening position and the second cover portion is at the second opening position,
FIG. 13 is a plan view showing an electrical storage module mounted with the wiring module in which the first cover portion is at the first opening position and the second cover portion is at the second closing position,
FIG. 14 is a plan view showing the electrical storage module mounted with the wiring module in which the first cover portion is at the first closing position and the second cover portion is at the second closing position, and
FIG. 15 is a plan view showing the electrical storage module mounted with the wiring module in which the first cover portion is at the first closing position and the second cover portion is at the second opening position.

### Embodiment of the Invention

### <Embodiment>

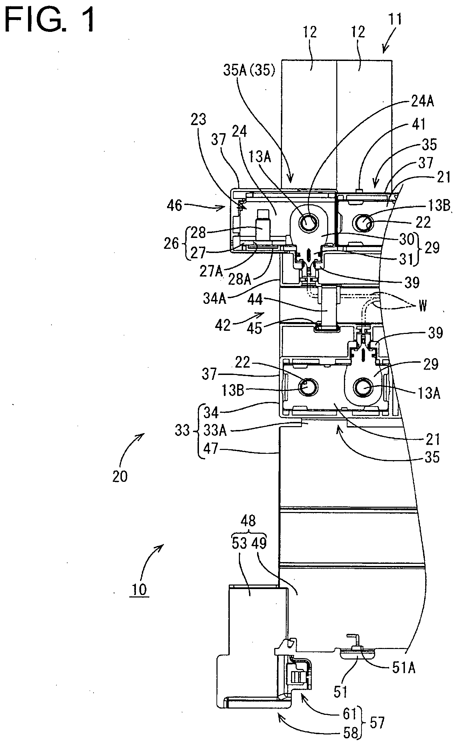

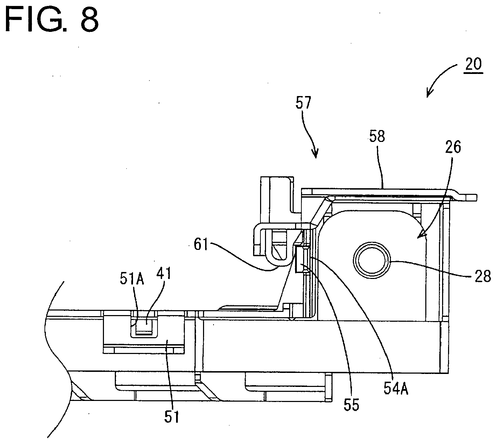

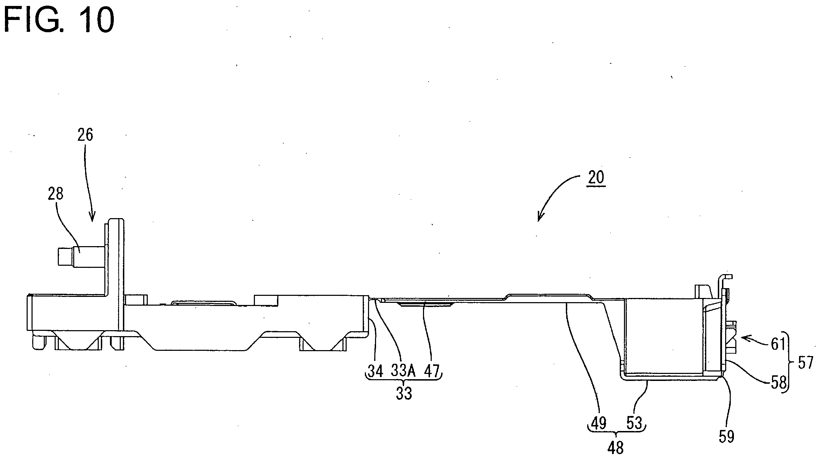

Hereinafter, one embodiment of the present invention is described with reference to FIGS. 1 to 15.

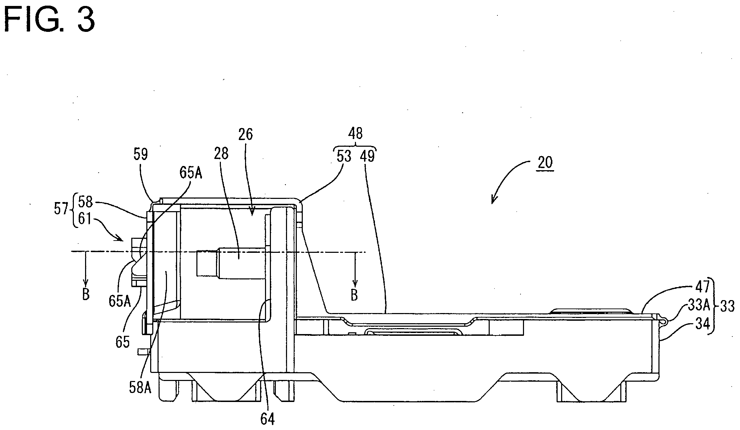

An electrical storage module 10 of this embodiment is mounted in a vehicle (not shown) such as an electric vehicle or a hybrid vehicle and used as a power source for driving the vehicle. In the following description, upper and lower sides of FIG. 1 are referred to as front and rear sides, a lateral direction is based on that of FIG. 1 and a vertical direction is based on that of FIG. 3.

### (Electrical Storage Module 10)

As shown in FIG. 1, the electrical storage module 10 includes an electrical storage element group 11 formed by arranging a plurality of electrical storage elements 12 and a wiring module 20 mounted on the upper surface of the electrical storage element group 11. Note that, in FIG. 1 and other figures, a left end side, which is a part of the electrical storage module 10, is shown and a right end side of the electrical storage module 10 is not shown.

Each of the plurality of electrical storage elements 12 has a substantially flat rectangular parallelepiped shape and an unillustrated electrical storage device is accommodated inside. Electrode terminals 13A, 13B (positive electrode 13A, negative electrode 13B) project upward on the upper surface of the electrical storage element 12. The respective electrical storage elements 12 are so oriented that the adjacent electrode terminals 13A, 13B have opposite polarities. This electrical storage element group 11 is fixed by an unillustrated holding plate.

### (Wiring Module 20)

The wiring module 20 includes a plurality of inter-electrode connecting members 21 for connecting between the laterally adjacent electrode terminals 13A, 13B, two end connecting members 23 (only left end side is shown, and the end connecting member 23 is connected to the electrode terminal 13B also on a right end side, but not shown) connected to the electrode terminals 13A (13B) located on end parts of series connection and an accommodating member 33 for accommodating the inter-electrode connecting members 21 and the end connecting members 23 inside.

### (Inter-Electrode Connecting Member 21)

The inter-electrode connecting member 21 is in the form of a plate made of metal such as copper, copper alloy, aluminum, aluminum alloy, stainless steel (SUS) or the like, and formed with a pair of left and right penetrating insertion holes 22 through which the bar-like electrode terminals 13A, 13B (shaft parts of bolts if the electrode terminals are in the form of nuts) are inserted. The insertion hole 22 has an elliptical shape long in the lateral direction. A voltage detection terminal 29 for detecting a voltage of the electrical storage element 12 is placed on the inter-electrode connecting member 21.

### (End Connecting Member 23)

The end connecting member 23 is in the form of a plate made of metal such as copper, copper alloy, aluminum, aluminum alloy, stainless steel (SUS) or the like, and includes a plate-like electrode connecting member 24 to be connected to the electrode terminal 13A (13B) and an external connecting portion 26 to be connected to outside.

The electrode connecting portion 24 has a rectangular shape and includes one circular insertion hole 24A through which the bar-like electrode terminal 13A, 13B (shaft of the bolt if the electrode terminal is in the form of a nut) is inserted. The voltage detection terminal 29 is placed on the electrode connecting portion 24.

The external connecting portion 26 includes a standing wall 27 standing up in a direction perpendicular to the electrode connecting portion 24 from a peripheral edge part of the electrode connecting portion 24, and a stud bolt 28 in the form of a cylindrical column standing up in a direction perpendicular to a plate surface of the standing wall 27.

A circular insertion hole 27A is formed to penetrate through the standing wall 27. The stud bolt 28 can connect a terminal or the like on an end part of a wire connected to an external device such as an inverter, has a cylindrical shape, is tapered in a stepped manner on a tip side and is formed with a flange portion 28A radially protruding on a base end side. The stud bolt 28 is inserted through the insertion hole 27A of the standing wall 27 and fixed to the standing wall 27, for example, by pressing fitting, welding or the like.

### (Voltage Detection Terminal 29)

The voltage detection terminal 29 includes a fastening portion 30 to be placed on and fastened to the inter-electrode connecting member 21 and the end connecting member 23, and a lead-out portion 31 led out in an area not overlapping with the inter-electrode connecting member 21 and the end connecting member 23. The lead-out portion 31 is positioned by being fitted into a positioning portion 39 of an insulating protector 34, and connected to a voltage detection wire W such as by crimping. The voltage detection wire W is connected to an unillustrated external ECU (Engine Control Unit). The ECU is mounted with a microcomputer, elements and the like and has a known configuration with a function of detecting voltages, currents, temperatures and the like of the electrical storage elements 12, controlling the charging and discharging of each electrical storage element 12 and the like.

### (Accommodating Member 33)

The accommodating member 33 is a flat box made of insulating synthetic resin and includes the insulating protector 34 for accommodating the inter-electrode connecting members 21 and the end connecting members 23, an insulating cover 47 for covering the insulating protector 34 and deflecting portions 33A coupling the insulating protector 34 and the insulating cover 47. The deflecting portions 33A are in the form of thin strips provided at a plurality of positions spaced apart by a predetermined distance in the lateral direction, and deflectable and deformable by being thin.

### (Insulating Protector 34)

The insulating protector 34 has a rectangular shape long in the lateral direction and is integrally formed with a plurality of accommodating portions 35 for accommodating the inter-electrode connecting members 21 and the end connecting members 23, and coupling portions 42 coupling between front and rear accommodating portions 35. The accommodating portions 35 are arranged side by side in the lateral direction on each of a front end part and a rear end part of the insulating protector 34. A row of the accommodating portions 35 on a front end side and that of the accommodating portions 35 on a rear end side are shifted in position in the lateral direction. Thus, the accommodating portion 35A arranged on the front end side and accommodating the end connecting member 23 includes a projecting portion 46, a substantially half of which in the lateral direction (connecting direction of the inter-electrode connecting members 21) laterally projects from a side surface 34A of the insulating protector 34.

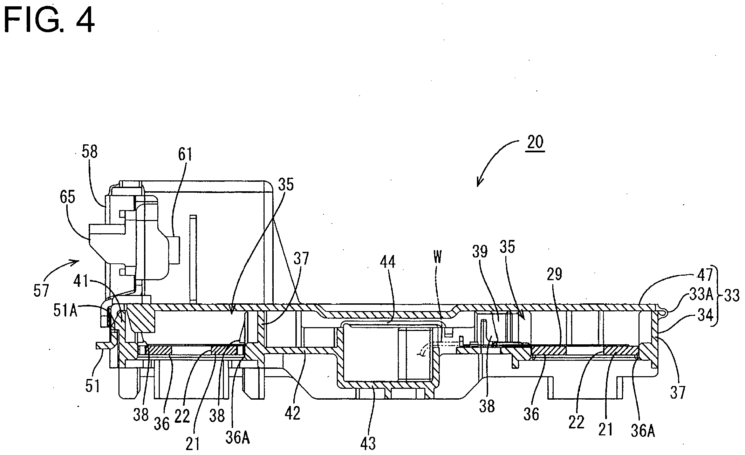

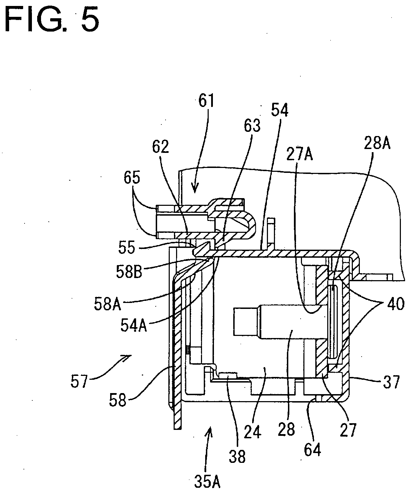

As shown in FIGS. 4 and 5, each accommodating portion 35 includes a bottom plate 36 on which the electrode connecting member 21 and the end connecting member 23 are to be placed, and an accommodating wall 37 in the form of a rectangular tube surrounding the electrode connecting member 21 and the end connecting member 23. The bottom plate 36 is formed with openings 36A in parts through which the electrode terminals 13A, 13B are inserted.

The accommodating wall 37 is set at such a height as to be able to prevent a tool or the like from contacting the electrode connecting member 21, the end connecting member 23 and the fastening member to cause a short circuit. A separation restricting piece 38 for restricting the separation of the inter-electrode connecting member 21 and the end connecting member 23 is deflectably and deformably provided on an inner surface of the accommodating wall 37. The separation restricting piece 38 is formed by forming a U-shaped cut on the accommodating wall 37 and restricts the separation of the inter-electrode connecting member 21 and the end connecting member 23 by locating a claw-like tip part above the inter-electrode connecting member 21 and the end connecting member 23.

The accommodating wall 37 is formed with the positioning portion 39 from which a part for leading out the voltage detection terminal 29 protrudes (see FIG. 1). The positioning portion 39 is for positioning the lead-out portion 31 of the voltage detection terminal 29 by fitting the lead-out portion 31 inside and a part thereof through which the voltage detection wire W is led out is open.

The accommodating portion 35A for accommodating the end connecting member 23 is formed with a pair of projections 40 projecting inwardly from the accommodating wall 37 as shown in FIG. 5. The pair of projections 40 hold the external connecting portion 26 from behind by coming into contact with the back surface of the standing wall 27 of the external connecting portion 26 and the flange portion 28A of the stud bolt 28 is arranged between the pair of projections 40.

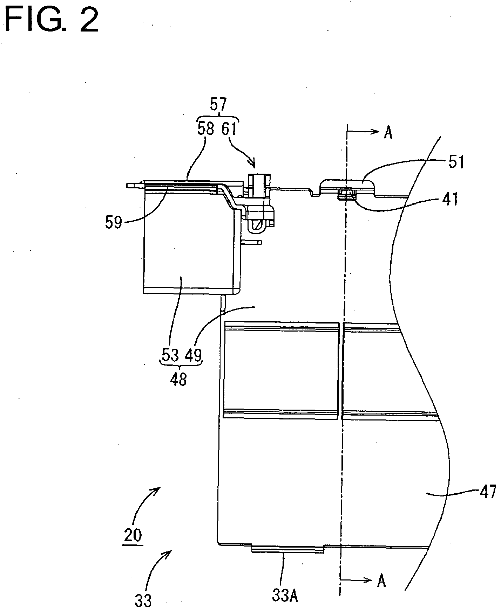

As shown in FIGS. 1 and 2, a locking portion 41 for holding the insulating cover 47 in a closed state is formed on the front end surface of the insulating protector 34. The locking portion 41 is shaped such that a lower end projects in a stepped manner and an upper side is inclined to gradually reduce a projecting distance toward the top. The coupling portion 42 is formed with a wire insertion groove 43 extending in the lateral direction in an intermediate part thereof. A base end part of a strip-like holding piece 44 for holding the wire in the wire insertion groove 43 is connected to an upper end part of one groove wall of the wire insertion groove 43. A tip part of the holding piece 44 is locked to a hole edge of an elliptical locking hole 45 formed on the other groove wall.

### (Insulating Cover 47)

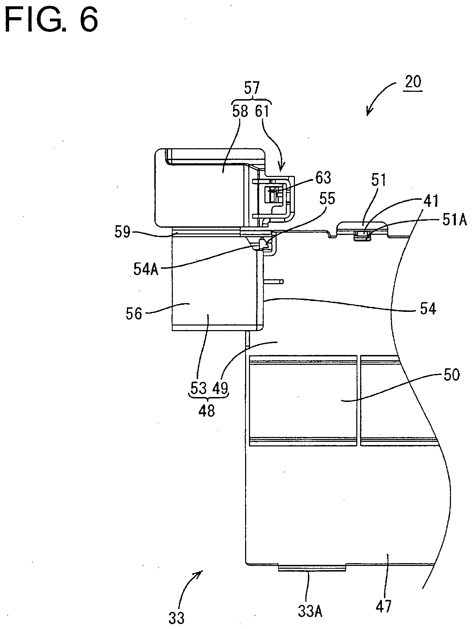

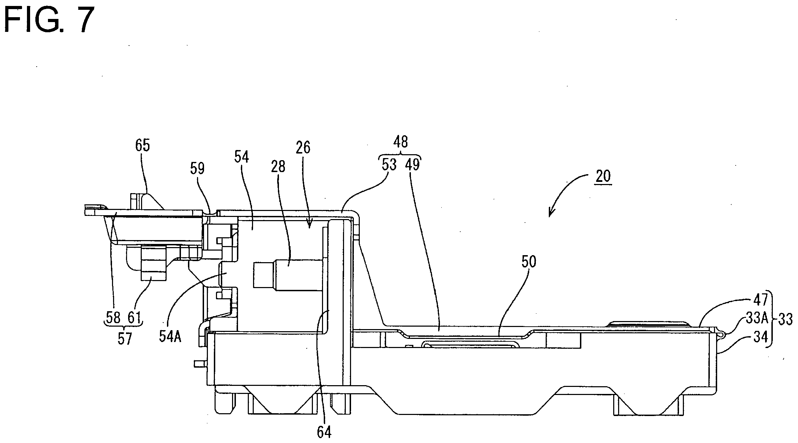

The insulating cover 47 is made of insulating synthetic resin and includes, as shown in FIGS. 6 and 7, a first cover portion 48 openable and closable with respect to the insulating protector 34, an openable and closable second cover portion 57 connected to a corner part of the first cover portion 48 and a hinge portion 59 coupling the first and second cover portions 48, 57.

### (First Cover Portion 48)

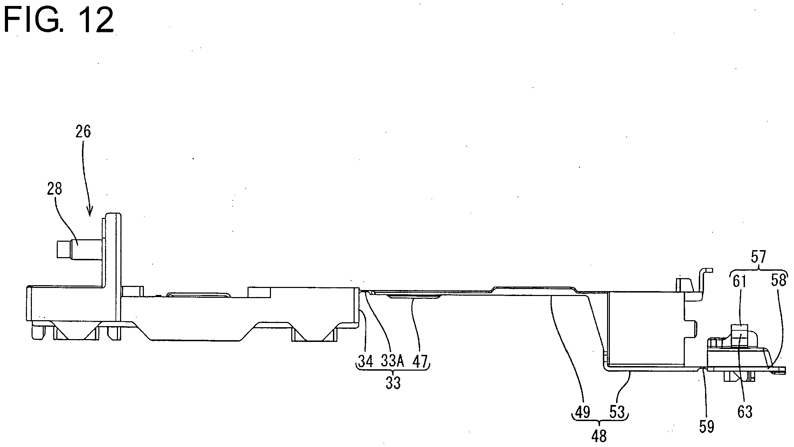

The first cover portion 48 has a rectangular shape long in the lateral direction, rotatable about the deflecting portion 33A to a first closing position (position of FIG. 7) for covering the inter-electrode connecting member 21 and a first opening position (position of FIG. 12) for exposing the inter-electrode connecting member 21, and includes a first cover main body 49 and a box-shaped end cover portion 53 arranged at a position to cover the end connecting member 23.

The first closing position is a position where the first cover portion 48 covers the entire insulating protector 34 except the projecting portion 46, and the first opening position is a position where the first cover portion 48 is rotated to such an angle as to expose the upper surface of the insulating protector 34 to such an degree that an operation can be performed for the inter-electrode connecting member 21 and the electrode connecting portion 24 of the end connecting member 23.

The first cover main body 49 is in the form of a rectangular plate and covers the entire insulating protector 34 except the projecting portion 46. The first cover main body 49 is formed with a recess 50 by recessing an upper side of the wire insertion groove 43 toward the insulating protector 34. A locked portion 51 for holding the first cover portion 48 at the first closing position by being locked to the locking portion 41 of the insulating protector 34 is formed on a tip part of the first cover portion 48.

The locked portion 51 is in the form of a deflectable and deformable frame having a through hole 51A and holds the first cover portion 48 at the first closing position for covering the insulating protector 34 by a stepped part of the locking portion 41 locking a hole edge of the through hole 51A. As shown in FIGS. 5, 6 and 7, the end cover portion 53 is formed with such a size as to cover the projecting portion 46 (part of the accommodating portion 35A where the external connecting portion 26 is arranged) and includes an erected wall 54 (an example of an "insulating wall") erected from an edge part of the first cover main body 49 and a rectangular ceiling wall 56 extending in a direction perpendicular to the erected wall 54.

The erected wall 54 has a rectangular shape and covers a part of the external connecting portion 26 on the side of the electrode connecting portion 24. The erected wall 54 is formed with an engaging portion 55 for holding the second cover portion 57 at a second opening position. The engaging portion 55 is formed on a tip part of a projecting piece 54A projecting along a wall surface of the erected wall 54 from the front end of the erected wall 54, laterally projects in a stepped manner on the side of the electrode connecting portion 24 and is shaped to gradually reduce a projecting distance toward the tip side.

A plurality of deflecting portions 33A in the form of strips are provided in the lateral direction and deflectable and deformable by being thin.

### (Second Cover portion 57)

The second cover portion 57 is coupled to the ceiling wall 56 via the hinge portion 59 resiliently deformable by being thin, rotatable to a second closing position (position of FIG. 3) for covering the end connecting member 23 and the second opening position (position of FIG. 7) for exposing the end connecting member 23 with the first cover portion 48 set at the first opening position, and includes a plate-like second cover main body 58 and an engaged portion 61 as shown in FIGS. 5 and 7.

The second cover main body 58 has a rectangular shape to cover a front part of the external connecting portion 26 and includes a bent portion 58A bent at a predetermined angle on the side of the electrode connecting portion 24. A tip part of the bent portion 58A serves as a pressing portion 58B for pressing the erected wall 54 from a position before the second closing position to the second closing position when the second cover portion 57 is rotated.

The engaged portion 61 includes a resilient portion 62 connected to the second cover main body 58 and configured to be resiliently deformed by coming into contact with the engaging portion 55, and a pair of grip portions 65 to be gripped by an operator. The resilient portion 62 includes an engaged projection 63 formed into a U shape and to be locked to the engaging portion 55. The engaged projection 63 projects in a stepped manner and shaped to gradually reduce a projecting distance. The pair of grip portions 65 are connected to and before (open side) the resilient portion 62 and include cut portions 65A obliquely cut.

When the second cover portion 57 is rotated from the second opening position to the second closing position, the engaged projection 63 comes into contact with the engaging portion 55 and the resilient portion 62 is resiliently deformed. At this time, the pressing portion 58B slides in contact with an opposite surface of the erected wall 54 to press the opposite surface of the erected wall 54 (see FIG. 5). On the other hand, in the case of rotating the second cover portion 57 from the second closing position to the second opening position, the second cover portion 57 is rotated to the second opening position by a resilient force (resilient restoring force) of the hinge portion 59 by pulling the grip portions 65 outwardly and releasing the locking of the engaged projection 63 and the engaging portion 55.

Note that if the first cover portion 48 is at the first closing position, an opening 64 is formed on a lateral side opposite to the part of the external connecting portion 26 on the side of the electrode connecting portion 24 regardless of whether the second cover portion 57 is at the second opening position or at the second closing position, the external connecting portion 26 is laterally exposed through this opening 64 and the wire and the like (not shown) are led out to outside through the opening 64.

Next, how to assemble the electrical storage module 10 is described.

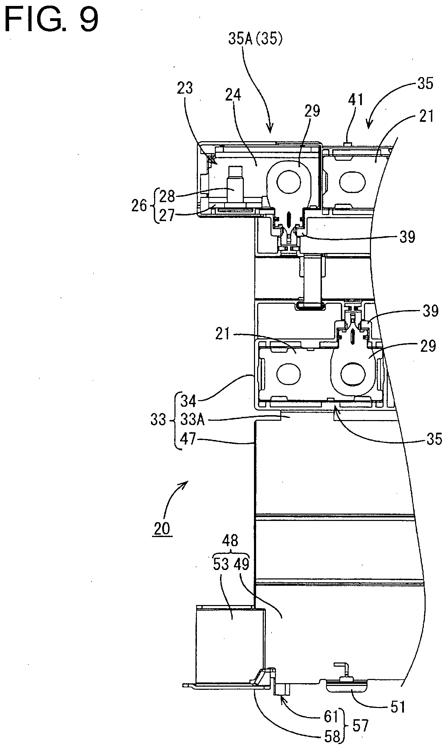

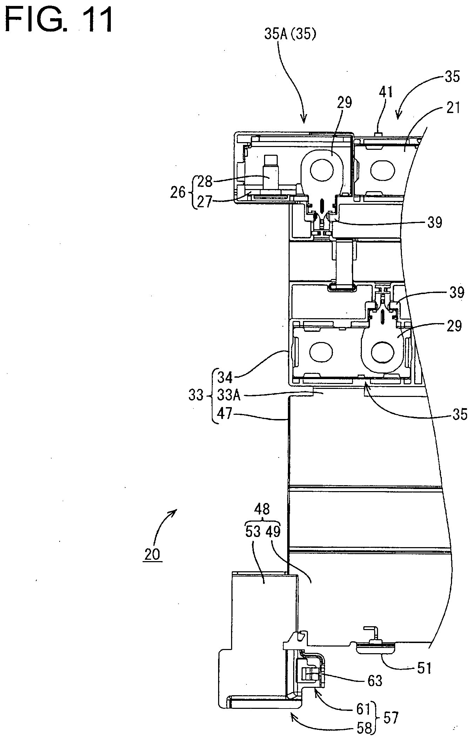

The inter-electrode connecting member 21 and the end connecting member 23 are accommodated in each accommodating portion 35 with the first cover portion 48 of the accommodating member 33 set at the first opening position and the second cover portion 57 set at the second closing or opening position (FIGS. 9 and 11). Further, the voltage detection terminal 29 connected to the end part of the voltage detection wire W is placed on the inter-electrode connecting member 21 and the end connecting member 23 and positioned in the positioning portion 39. Then, the first cover portion 48 is rotated and set to the first closing position and the second cover portion 57 is set to the second closing position. In this way, the wiring module 20 is formed (FIG. 2).

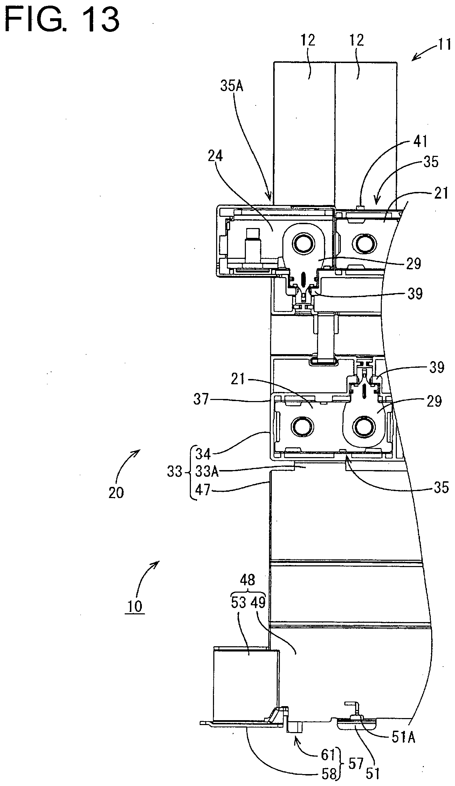

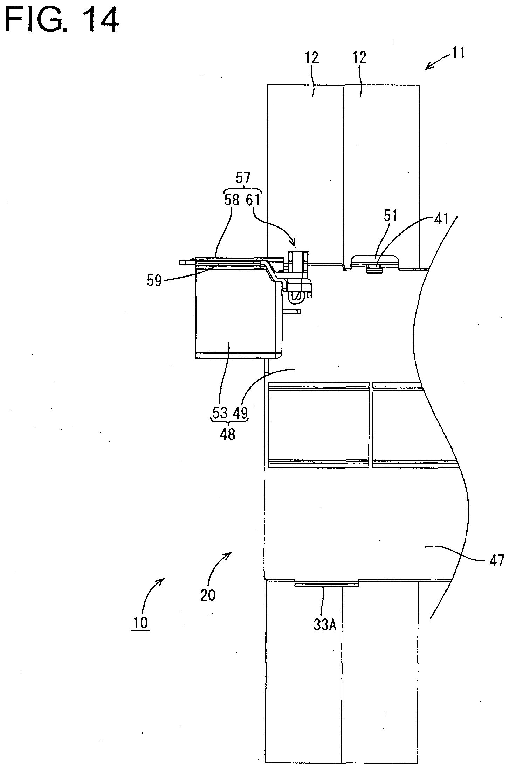

In the case of mounting this wiring module 20 on the electrical storage element group 11, the first cover portion 48 is rotated and set to the first opening position and placed at a predetermined position of the electrical storage element group 11 and the inter-electrode connecting members 21 and the end connecting members 23 are fastened to the electrode terminals 13A, 13B penetrating through the inter-electrode connecting members 21 and the end connecting members 23 by unillustrated bolts or nuts as fastening members (FIG. 13). Then, by rotating the first cover portion 48 and setting it to the first closing position, the electrical storage module 10 is formed (FIG. 14).

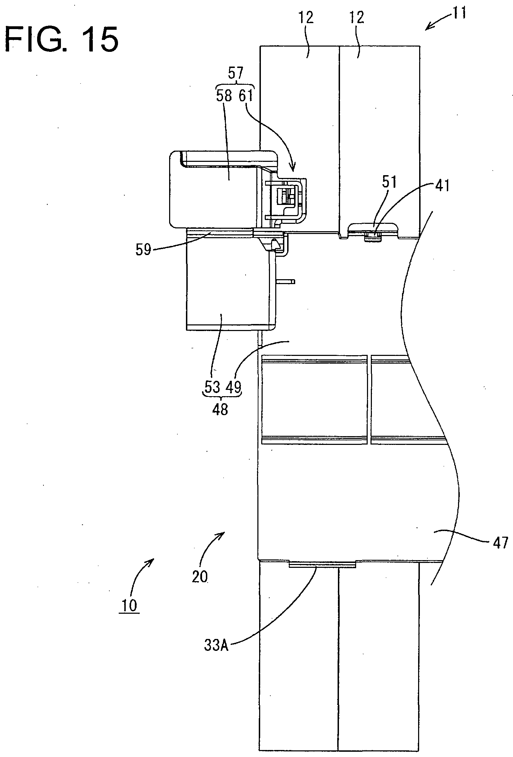

Subsequently, the electrical storage module 10 is accommodated at a predetermined position of the vehicle. Then, the second cover portion 57 is rotated to the second opening position (FIG. 15). The end part of the wire connected to the external device such as an inverter is connected to the external connecting portion 26 of the end connecting member 23. When the connecting operation is completed, the second cover portion 57 is rotated to the second closing position (FIG. 14).

According to this embodiment, the following functions and effects are exhibited.

The wiring module 20 is the wiring module 20 to be mounted on the electrical storage element group 11 formed by arranging a plurality of electrical storage elements 12 including the positive and negative electrode terminals 13A, 13B and includes the inter-electrode connecting members 21 for electrically connecting between the electrode terminals 13A, 13B of adjacent ones of the electrical storage elements 12, the end connecting members 23 connected to the electrode terminals 13A, 13B located on the end parts of series connection, the insulating protector 34 for accommodating the inter-electrode connecting members 21 and the end connecting members 23 and the insulating cover 47 for covering the insulating protector 34. The insulating cover 47 includes the first cover portion 48 displaceable between the first closing position for covering the inter-electrode connecting member 21 and the first opening position for exposing the inter-electrode connecting member 21 and the second cover portion 57 connected to the first cover portion 48 and rotatable between the second closing position for covering the end connecting member 23 and the second opening position for exposing the end connecting member 23 with the first cover portion 48 set at the first closing position. The first cover portion 48 includes the engaging portion 55 and the second cover portion 57 includes the engaged portion 61 for holding the second cover portion 57 in position with respect to the first cover portion 48 by being engaged with the engaging portion 55.

According to this embodiment, the second cover portion 57 can be held in position with respect to the first cover portion 48 in connecting the electrode terminals 13A, 13B on the end part of series connection by engaging the engaged portion 61 of the second cover portion 57 with the engaging portion 55 of the first cover portion 48. Thus, the electrode terminals 13A, 13B on the end part of series connection can be easily connected.

Further, the deflectable and deformable deflecting portions 33A are provided which connect the insulating protector 34 and the first cover portion 48.

In this way, since it is not necessary to perform a mounting operation of the insulating cover as compared to the case where the insulating protector and the insulating cover are separate bodies, the operability of the connecting operation of the electrode terminals 13A, 13B can be improved.

Furthermore, the end connecting member 23 includes the electrode connecting portion 24 to be connected to the electrode terminal 13A, 13B and the external connecting portion 26 to be connected to outside, the insulating cover 47 includes the erected wall 54 (insulating wall) for insulating the external connecting portion 26 from outside, the erected wall 54 is formed with the engaging portion 55, the engaged portion 61 includes the resilient portion 62 to be resiliently deformed by coming into contact with the engaging portion 55, and the second cover portion 57 includes the pressing portion 58B for pressing the erected wall 54 from the side opposite to the engaged portion 61 when the engaged portion 61 comes into contact with the engaging portion 55.

In this way, the deformation of the erected wall 54 can be suppressed by the pressing portion 58B pressing the erected wall 54 when the engaged portion 61 comes into contact with the engaging portion 55.

Further, the second cover portion 57 is connected to the tip side (end side opposite to the deflecting portions 33A) of the first cover portion 48.

In this way, since the second cover portion 57 can be locally opened and closed, the entrance of dust and the like from outside can be suppressed and the second cover portion 57 can be easily and safely opened and closed.

### <Other Embodiments>

The present invention is not limited to the above described and illustrated embodiment. For example, the following embodiments are also included in the technical scope of the present invention.
(1) Although the position where the first cover portion 48 is substantially at 180° to the insulating protector 34 is the first opening position in the above embodiment, there is no limitation to this and a position where the first cover portion 48 is rotated to such an extent that an operator can perform an operation for the inter-electrode connecting member 21 may be the first opening position. Further, although the position where the second cover portion 57 is rotated 90° with respect to the opening on the front surface of the end cover portion 53 is the second opening position, there is no limitation to this and a position where the second cover portion 57 is rotated to such an extent that the operator can perform an operation for the end connecting member 23 may be the second opening position.
(2) Although the second cover portion 57 is held at the second closing position for covering the front part of the external connecting portion 26 by the engaged portion 61 being locked to the engaging portion 55, there is no limitation to this. For example, an engaging portion and an engaged portion for holding the second cover portion 57 at the second opening position may be provided and the second cover portion 57 may be held at the second opening position. In this case, the hinge portion may be so configured that the second cover portion 57 is rotated from the second opening position to the second closing position by a resilient force of the hinge portion. Further, although the second cover portion 57 is opened by the resilient force of the hinge portion 59, there is no limitation to this and the resilient force of the hinge portion 59 may not be used to open and close the second cover portion 57.
(3) The number of the electrical storage elements 12 constituting the electrical storage module 10 is arbitrary and the size of the wiring module 20 can be appropriately set according to the number of the electrical storage elements 12.
(4) Although the electrical storage element 12 is a battery, there is no limitation to this and the electrical storage element 12 may be a capacitor or the like.

### List of Reference Signs

- 10:: electrical storage module
- 11:: electrical storage element group
- 12:: electrical storage element
- 13A, 13B:: electrode terminal
- 20:: wiring module
- 21:: inter-electrode connecting member
- 23:: end connecting member
- 24:: electrode connecting portion
- 26:: external connecting portion
- 33:: accommodating member
- 34:: insulating protector
- 35: (35A): accommodating portion
- 47:: insulating cover
- 48:: first cover portion
- 51:: locked portion
- 53:: end cover portion
- 54:: erected wall (insulating wall)
- 55:: engaging portion
- 57:: second cover portion
- 58B:: pressing portion
- 59:: hinge portion
- 61:: engaged portion
- 62:: resilient portion
- 63:: engaged projection

## Claims

1. A wiring module to be mounted on an electrical storage element group formed by arranging a plurality of electrical storage elements including positive and negative electrode terminals, comprising:
an inter-electrode connecting member for electrically connecting between the electrode terminals of adjacent ones of the electrical storage elements;
an end connecting member to be connected to the electrode terminal located on an end part of series connection;
an insulating protector for accommodating the inter-electrode connecting member and the end connecting member; and
an insulating cover for covering the insulating protector,
wherein:
the insulating cover includes:
a first cover portion displaceable between a first closing position for covering the inter-electrode connecting member and a first opening position for exposing the inter-electrode connecting member; and
a second cover portion connected to the first cover portion and rotatable between a second closing position for covering the end connecting member and a second opening position for exposing the end connecting member with the first cover portion set at the first closing position; and
the first cover portion includes an engaging portion and the second cover portion includes an engaged portion for holding the second cover portion in position with respect to the first cover portion by being engaged with the engaging portion.

2. A wiring module according to claim 1, comprising a deflectable and deformable deflecting portion for connecting the insulating protector and the first cover portion.

3. A wiring module according to claim 1 or 2, wherein:
the end connecting member includes an electrode connecting portion to be connected to the electrode terminal and an external connecting portion to be connected to outside;
the insulating cover includes an insulating wall for insulating the external connecting portion from outside;
the insulating wall is formed with the engaging portion;
the engaged portion includes a resilient portion to be resiliently deformed by coming into contact with the engaging portion; and
the second cover portion includes a pressing portion for pressing the insulating wall from a side opposite to the engaged portion when the engaged portion comes into contact with the engaging portion.

4. A wiring module according to any one of claims 1 to 3, wherein the second cover portion is connected to a tip side of the first cover portion.

5. An electrical storage module, comprising:
the electrical storage element group; and
the wiring module according to any one of claims 1 to 4 to be mounted on the electrical storage element group.
